# FASCICULE DE BREVET EUROPEEN

(11) **EP 3 519 261 B1**
(45) Date de publication et mention de la délivrance du brevet: **30.09.2020**
(21) Numéro de dépôt: 17751640.8
(22) Date de dépôt: 18.07.2017
(51) Int. Cl.: B60S 1/52, B60S 1/56, G02B 27/00

(54) **DISPOSITIF DE NETTOYAGE, DESTINÉ À PROJETER AU MOINS UN FLUIDE VERS UNE SURFACE À NETTOYER D'UN VÉHICULE AUTOMOBILE, TEL QU'UNE SURFACE OPTIQUE D'UN CAPTEUR D'UN SYSTÈME DE DÉTECTION OPTIQUE**
REINIGUNGSVORRICHTUNG ZUM SPRÜHEN VON MINDESTENS EINEM FLUID IN RICHTUNG EINER ZU REINIGENDEN OBERFLÄCHE, WIE ETWA EINE OPTISCHE OBERFLÄCHE EINES SENSORS EINES SYSTEMS ZUR OPTISCHEN DETEKTION
CLEANING DEVICE INTENDED TO SPRAY AT LEAST ONE FLUID TOWARDS A SURFACE TO BE CLEANED OF A MOTOR VEHICLE, SUCH AS AN OPTICAL SURFACE OF A SENSOR OF AN OPTICAL DETECTION SYSTEM

(30) Priorité: 28.09.2016 FR 1659212
(43) Date de publication de la demande: 07.08.2019
(73) Titulaire: Valeo Systèmes d'Essuyage, 78322 Le Mesnil Saint Denis (FR)
(72) Inventeur: BAUDOUIN, Maxime, 63500 Issoire (FR); GRASSO, Giuseppe, 63500 Issoire (FR); KOLANOWSKI, Grégory, 63500 Issoire (FR); PASSERIEUX, Thibaud, 63500 Issoire (FR); PICOT, Philippe, 63500 Issoire (FR); VIEILLE, Jordan, 63500 Issoire (FR)
(74) Mandataire: Valeo Vision
(86) Numéro de dépôt international: PCT/EP2017/068147
(87) Numéro de publication internationale: WO 2018/059771

(56) Documents cités:
- WO-A1-2016/074933
- WO-A1-2016/116568
- JP-A- S63 269 761
- US-A1- 2016 103 316

## Description

La présente invention se rapporte au domaine des systèmes de détection destinés à équiper un véhicule automobile, notamment pour leur application dans des dispositifs d'aide à la conduite. Elle concerne plus particulièrement un dispositif de nettoyage d'un tel système de détection.

Les systèmes de détection qui équipent désormais un grand nombre de véhicule automobile ont pour fonction de recueillir des informations sur l'environnement du véhicule automobile, afin notamment de fournir au conducteur une aide à la conduite et/ou à la manœuvre de ce véhicule. A cette fin, le système de détection est couramment installé sur le véhicule de manière à collecter des informations sur l'environnement frontal, sur l'environnement arrière ou sur l'environnement latéral du véhicule : le système de détection est donc classiquement installé en face avant et/ou en face arrière et/ou sur un rétroviseur du véhicule.

De telles localisations sont toutefois particulièrement exposées aux salissures telles qu'eau sale, poussières ou autres types de projections. Or de telles salissures forment un obstacle à l'émission et à la réception des informations et peuvent perturber le fonctionnement du système de détection, voire rendre ce fonctionnement impossible.

Plus récemment, on cherche à équiper les véhicules automobiles de systèmes de détection laser qui ciblent la scène de route en amont du véhicule pour analyser si des obstacles risquent d'être accidentogènes et prévoir les manœuvres d'évitement et/ou de freinage d'urgence à prévoir en conséquence. L'impératif de propreté de la surface optique de ces systèmes de détection est le même que celui précédemment décrit.

Par ailleurs, les surfaces optiques des détecteurs de tels systèmes de détection laser sont généralement de forme complexe, et elles comportent notamment une zone d'émission d'un signal de détection et une zone de réception de ce signal. Il importe donc que le dispositif mis en oeuvre pour nettoyer cette surface optique permette l'injection d'un ou plusieurs fluides de nettoyage et/ou de séchage sur une surface de grande dimension correspondant au champ, large, de détection du détecteur utilisé dans le système de détection (par exemple un détecteur laser).

De tels dispositifs de nettoyage comportent, de manière connue, au moins un corps d'acheminement de fluide(s) de nettoyage et/u de séchage qui est raccordé, à son extrémité amont, à un ensemble de stockage de(s) fluide(s) et qui est raccordé, à son extrémité aval, à une rampe de distribution dans laquelle est agencé un ensemble d'orifices de distribution par lesquels le ou les fluides sont projetés sur la surface optique à nettoyer. On définit l'extrémité amont et l'extrémité aval par rapport au sens d'acheminement de fluide.

La forme et la dimension de la rampe peuvent varier en fonction de la surface optique à nettoyer. On pourra ainsi prévoir une rampe plus ou moins longue, selon la direction transversale à la direction d'allongement du corps d'acheminement, pour fournir un nombre approprié d'orifices de distribution, et/ou prévoir une rampe plus ou moins droite afin de s'adapter la courbure de la surface optique. Un dispositif de nettoyage selon l'art antérieur est par exemple divulgué dans le document WO2016/116568.

Afin d'optimiser les coûts de fabrication, il est avantageux qu'un même corps d'acheminement puisse recevoir une variété la plus large possible de rampes de distribution. Il est donc recherché de disposer de corps d'acheminement et rampes de distribution de réalisation simple, et qui puissent être facilement assemblés de manière étanche, reproductible et rapide.

Un autre problème résolu par la présente invention est la fiabilisation du montage angulaire de la rampe de distribution par rapport à la surface optique du détecteur. L'invention a pour but de proposer un dispositif de nettoyage compact et une rampe de distribution qui soit parfaitement et géométriquement adaptée à la surface optique du détecteur. En effet, un des buts de l'invention est de pouvoir changer et monter la rampe de distribution autant de fois que l'utilisateur le souhaite tout en ayant toujours les mêmes angles de projection de fluide vers la surface optique du détecteur.

L'invention a pour but de proposer un dispositif de nettoyage compact, qui permette un nettoyage efficace de la totalité de la surface optique considérée, et qui soit d'un assemblage simple et reproductible.

Dans ce but, l'invention a pour objet un dispositif de nettoyage, destiné à projeter au moins un fluide vers une surface à nettoyer d'un véhicule automobile, tel qu'une surface optique d'un capteur d'un système de détection optique, ledit dispositif de nettoyage comportant au moins un corps d'acheminement et une rampe de distribution d'un ou plusieurs fluides de nettoyage et/ou de séchage, ainsi que des moyens de rattachement d'une portion de raccordement de la rampe de distribution à une extrémité du corps d'acheminement, caractérisé en ce que les moyens de rattachement comportent un ensemble d'emboîtement élastique et un ensemble de détrompage formés respectivement par des éléments portés par le corps d'acheminement et des éléments complémentaires portés par la rampe de distribution.

Le corps d'acheminement peut présenter une forme générale allongée selon une direction longitudinale, et il est raccordé, à son extrémité amont, à un ensemble de stockage et d'alimentation en fluides de nettoyage et/ou de séchage. A son extrémité aval, opposée à son extrémité amont, il est rattaché à la rampe de distribution par l'intermédiaire des moyens de rattachement précités. Selon un mode de réalisation particulier de l'invention, le corps d'acheminement présente une forme sensiblement cylindrique.

On peut prévoir que le corps d'acheminement comporte un piston, qui peut également présenter une forme sensiblement cylindrique, percé d'un canal d'acheminement par lequel le ou les fluides de nettoyage et/ou de séchage sont amenés jusqu'à un ensemble de conduits de distribution agencés dans la rampe de distribution. Cet ensemble de conduits de distribution comporte au moins un canal de distribution dans lequel est agencée une pluralité d'orifices de distribution par lesquels le ou les fluides de nettoyage et/ou de séchage sont projetés sur la surface optique du détecteur du système de détection.

Afin de permettre une répartition aussi homogène que possible du ou des fluides de nettoyage et/ou de séchage sur l'ensemble de la surface optique à nettoyer, le canal de distribution et, par-là, la rampe de distribution, s'étend avantageusement de part et d'autre, selon une direction générale transversale, de la portion de raccordement par laquelle cette rampe de distribution est rattachée à l'extrémité aval du corps d'acheminement. Selon un mode de réalisation particulier de l'invention, le canal de distribution s'étend sensiblement symétriquement, selon cette direction générale transversale, de part et d'autre de la portion de raccordement de la rampe de distribution par laquelle cette dernière se rattache à l'extrémité aval du corps d'acheminement.

Selon une caractéristique de l'invention, les éléments formant l'ensemble d'emboîtement élastique sont configurés en paire pour réaliser en outre une fonction de détrompage.

Notamment, les éléments formant l'ensemble d'emboîtement élastique peuvent comporter au moins un premier ergot et un deuxième ergot agencés sur le corps d'acheminement, et une première fenêtre et une deuxième fenêtre agencées dans une portion de raccordement de la rampe de distribution, ces éléments étant configurés pour que le premier ergot coopère spécifiquement avec la première fenêtre et que le deuxième ergot coopère spécifiquement avec la deuxième fenêtre.

La rampe de distribution et le corps d'acheminement sont ainsi assemblés et verrouillés entre eux par encliquetage du premier ergot et du deuxième ergot dans les fenêtres correspondantes agencées dans la portion de raccordement de la rampe de distribution, les dimensions et formes respectives de la rampe de distribution et du corps d'acheminement étant définies pour que ce dernier constitue un élément mâle s'insérant dans l'élément femelle que forme la rampe de distribution. Avantageusement, pour faciliter cette insertion, le premier ergot et le deuxième ergot présentent chacun un plan incliné orienté vers l'aval du corps d'acheminement.

Selon une caractéristique de l'invention, le premier ergot et le deuxième ergot sont décalés l'un par rapport à l'autre selon la direction longitudinale d'extension du corps d'acheminement. Il en résulte naturellement que la première fenêtre et la deuxième fenêtre sont également décalées entre elles selon une direction sensiblement parallèle à la direction longitudinale d'extension du corps d'acheminement et de la portion de raccordement de la rampe de distribution, la portion de raccordement de la rampe de distribution s'étendant sensiblement selon la même direction longitudinale que le corps d'acheminement.

Selon un mode de réalisation de l'invention, le premier ergot et le deuxième ergot sont sensiblement symétriquement agencés par rapport à un plan médian de l'ensemble formé par le corps d'acheminement et la portion de raccordement de la rampe de distribution, ce plan médian étant défini par la direction longitudinale d'extension du corps d'acheminement et par la direction transversale d'extension du canal de distribution agencé dans la rampe de distribution. En d'autres termes, les ergots sont diamétralement opposés. Il résulte alors de l'agencement des premier et deuxième ergots sur le corps d'acheminement que la première fenêtre et la deuxième fenêtre sont avantageusement agencées sensiblement symétriquement par rapport au plan médian précédemment défini dans la portion de raccordement de la rampe de distribution.

Le premier ergot et le deuxième ergot peuvent être agencés sur le piston précédemment défini. En effet, il est particulièrement intéressant de réaliser un dispositif de nettoyage dans lequel la rampe de distribution est mobile pour que le fluide projeté par les orifices de distribution puisse atteindre la totalité de la surface optique de manière efficace et homogène. Pour ce faire, le piston, rendu solidaire de la rampe de distribution par les moyens de rattachement précités, par exemple, peut être rendu mobile entre différentes positions correspondant aux diverses positions recherchées pour la rampe et le canal de distribution. Le piston peut être mobile, selon sa direction d'extension longitudinale, entre une position de repos et au moins une position de travail dans laquelle il permet la distribution d'au moins un fluide de nettoyage et/ou de séchage par la rampe de distribution. Dans ce cas, les formes et dimensions respectives du piston et de la rampe de distribution sont définies pour que ce soit le piston qui forme l'élément mâle s'insérant dans l'élément femelle que constitue la portion de raccordement de la rampe de distribution par laquelle cette dernière se rattache alors audit piston.

Selon une autre caractéristique de l'invention, les moyens de rattachement de la rampe de distribution au corps d'acheminement comportent au moins un doigt de positionnement agencé sur le corps d'acheminement ou sur le piston. Selon différentes caractéristiques, prises séparément ou en combinaison :
- ce doigt de positionnement est agencé selon une direction sensiblement longitudinale,
- ce doigt de positionnement est agencé au voisinage de l'extrémité aval du corps d'acheminement,
- ce doigt de positionnement est agencé au voisinage de l'extrémité aval du piston,
- ce doigt de positionnement est configuré pour se placer, lorsque la rampe de distribution est assemblée avec le corps d'acheminement, en butée au fond d'une encoche agencée dans la portion de raccordement de ladite rampe de distribution,
- ce doigt de positionnement est sensiblement aligné, selon la direction longitudinale d'extension du corps d'acheminement, avec le premier ergot et/ou avec le deuxième ergot,
- l'encoche agencée dans la portion de raccordement de la rampe de distribution pour recevoir un doigt de positionnement correspondant est sensiblement alignée, selon la direction longitudinale d'extension du corps d'acheminement et de la portion de raccordement de la rampe de distribution, avec la première fenêtre ou avec la deuxième fenêtre précédemment définies,
- le corps d'acheminement comporte un épaulement configuré pour recevoir en appui l'épaisseur de la portion de raccordement de la rampe de distribution,
- ce doigt de positionnement est agencé sur le piston.

Il peut notamment être prévu deux doigts de positionnement, par exemple diamétralement opposés, qui présentent des dimensions et/ou des formes différentes d'un doigt de positionnement à l'autre, et/ou encore un agencement longitudinal le long du corps d'acheminement ou du piston différent de l'un à l'autre, et il peut être prévu simultanément un agencement ou un dimensionnement équivalent pour les encoches sur la rampe de distribution. Les doigts de positionnement et les encoches réalisent alors, outre une fonction d'indexage angulaire, une fonction de détrompage.

Avantageusement, l'épaulement à partir duquel s'étend l'avancée précitée est agencé sur la totalité de la périphérie du corps d'acheminement, et ses dimensions sont définies pour qu'il reçoive en appui l'épaisseur de la portion de raccordement de la rampe de distribution. Ainsi, la portion de raccordement de la rampe de distribution forme, avec le corps d'acheminement, une surface sensiblement continue en leur zone de rattachement. Avantageusement, lorsque l'avancée est réalisée sur le piston, l'épaulement est également agencé sur ce même piston.

Le décalage longitudinal des premier et deuxième ergots ainsi que des première et deuxième fenêtres, ainsi que la présence de l'avancée précitée, constituent des éléments de détrompage permettant d'assembler la rampe de distribution avec le corps d'acheminement selon une orientation spatiale prédéfinie, notamment au regard du plan médian précédemment défini. Il est également à noter que la coopération des premier et deuxième ergots avec les première et deuxième fenêtres constitue un moyen de blocage longitudinal de la rampe de distribution par rapport au corps d'acheminement.

La mise en place de tels éléments de détrompage présente un avantage particulièrement intéressant dans le cas d'un dispositif destiné à nettoyer une surface optique courbe. En effet, comme il a été évoqué précédemment, il est important que le dispositif de nettoyage permette la projection de fluide de nettoyage/séchage sur la totalité de la surface optique du système de détection, en particulier pour assurer un nettoyage homogène de la zone d'émission et de la zone de réception du détecteur considéré. Ceci peut être obtenu par la mise en place d'une rampe de distribution courbe, par exemple dont la courbure est sensiblement identique à une courbure de la surface optique ou homothétique d'une telle courbure. Dans ce cas, il peut être avantageux de réaliser la rampe de distribution en deux parties, symétriquement disposées, lorsque la rampe de distribution est rattachée au corps d'acheminement, de part et d'autre du plan médian précité, et fixées entre elles, par exemple par soudage. Un tel agencement permet de simplifier la fabrication d'une telle rampe, chacune des parties la constituant pouvant être facilement réalisée par injection d'un matériau polymère approprié dans un moule.

Selon une caractéristique de l'invention, la rampe de distribution peut être réalisée en une première partie et une deuxième partie soudées l'une sur l'autre, chaque partie présentant de façon symétrique des éléments de l'ensemble d'emboîtement élastique et des éléments de l'ensemble de détrompage.

Dans ce contexte, les parties de la rampe de distribution sont fixées entre elles par une surface sensiblement médiane contenant respectivement l'axe d'extension longitudinale de la portion de raccordement de ladite rampe de distribution, ainsi que les axes d'un canal de distribution, d'un canal principal de répartition et d'au moins un canal auxiliaire de répartition agencés dans ladite rampe de distribution pour acheminer le ou les fluides de nettoyage et/ou de séchage jusqu'à un ensemble d'orifices de distribution destinés à projeter ce ou ces fluides sur la surface optique à nettoyer.

Par ailleurs, pour des raisons d'encombrement, le dispositif de nettoyage d'un système de détection pour un véhicule automobile est généralement fixé sur un boîtier de réception d'un détecteur de ce système de détection. Il est donc primordial, lorsque la surface optique considérée est courbe, que la fixation de l'ensemble formé par le corps d'acheminement et la rampe de distribution sur le boîtier de réception du détecteur se fasse de manière simple avec une orientation prédéfinie, notamment au regard de ladite surface optique. Rampe de distribution et corps d'acheminement étant généralement préassemblés avant d'être installés sur le boîtier de réception du système de détection, il est donc important de disposer de moyens simples et reproductibles permettant de réaliser l'orientation spatiale recherchée. Les éléments de détrompage proposés par l'invention permettent alors d'atteindre une telle orientation de manière simple et reproductible.

Selon une autre caractéristique, les moyens de rattachement de la rampe de distribution au corps d'acheminement du dispositif de nettoyage selon l'invention comportent également au moins un appendice latéral d'extension sensiblement longitudinale, agencé sur le corps d'acheminement, et configuré pour s'insérer dans une fente sensiblement longitudinale agencée dans la rampe de distribution.

Selon différentes caractéristiques, prises séparément ou combinées, d'un ou plusieurs modes particuliers de réalisation de l'invention :
- deux appendices latéraux sont agencés sur le corps d'acheminement,
- les deux appendices latéraux sont sensiblement symétriquement agencés par rapport à un deuxième plan médian longitudinal sensiblement perpendiculaire au premier plan médian longitudinal transversal précédemment évoqué,
- les deux appendices latéraux s'étendent longitudinalement vers l'aval du corps d'acheminement, à partir de l'épaulement précédemment défini,
- selon une section droite du corps d'acheminement, les deux appendices latéraux sont agencés sensiblement à 90 degrés par rapport aux premier et deuxième ergots,
- les deux appendices latéraux sont agencés sur le piston.

Ces appendices latéraux constituent, lors de l'assemblage de la rampe de distribution avec le corps d'acheminement, un moyen de guidage et de blocage de ces deux éléments ensemble. En effet, la longueur de ces appendices latéraux et leur insertion dans des fentes de longueurs correspondantes agencées au sein de la portion de raccordement de la rampe de distribution réalisent un guidage longitudinal de la rampe lors de l'insertion du corps d'acheminement ou du piston en son sein. Par ailleurs, une fois rampe de distribution et corps ou piston assemblés, la coopération des appendices latéraux et des fentes correspondantes forme un blocage relatif en rotation de la rampe de distribution par rapport au corps ou au piston.

L'invention propose ainsi un dispositif de nettoyage dans lequel l'assemblage de la rampe de distribution et du corps d'acheminement (qu'il s'agisse du corps d'acheminement lui-même ou qu'il s'agisse de l'élément constitutif de ce corps d'acheminement qu'est le piston) peut être réalisé de manière simple et reproductible, sans risque d'erreur d'orientation spatiale de la rampe de distribution au regard du corps d'acheminement en vue de l'installation ultérieure de l'assemblage formé par ces deux éléments sur un boîtier de réception d'un détecteur d'un système de détection d'un véhicule automobile. Les moyens proposés par l'invention permettent en outre de réaliser un blocage de la rampe de distribution et du corps d'acheminement entre eux selon deux directions sensiblement perpendiculaires entre elles, augmentant la fiabilité de l'assemblage de ces deux éléments entre eux.

L'invention concerne en outre un système de détection destiné à équiper un véhicule automobile, comprenant au moins un détecteur accueilli dans un boîtier de réception et au moins un dispositif de nettoyage, tel qu'il vient d'être décrit précédemment, pour le nettoyage d'une surface optique dudit détecteur. Le dispositif de nettoyage peut notamment être fixé sur le boîtier de réception du détecteur.

L'invention concerne également un véhicule automobile équipé d'un système de détection tel qu'il vient d'être présenté.

D'autres caractéristiques, détails et avantages de l'invention et de son fonctionnement ressortiront plus clairement à la lecture de la description donnée ci-après à titre indicatif, en relation avec les figures annexées, dans lesquelles :

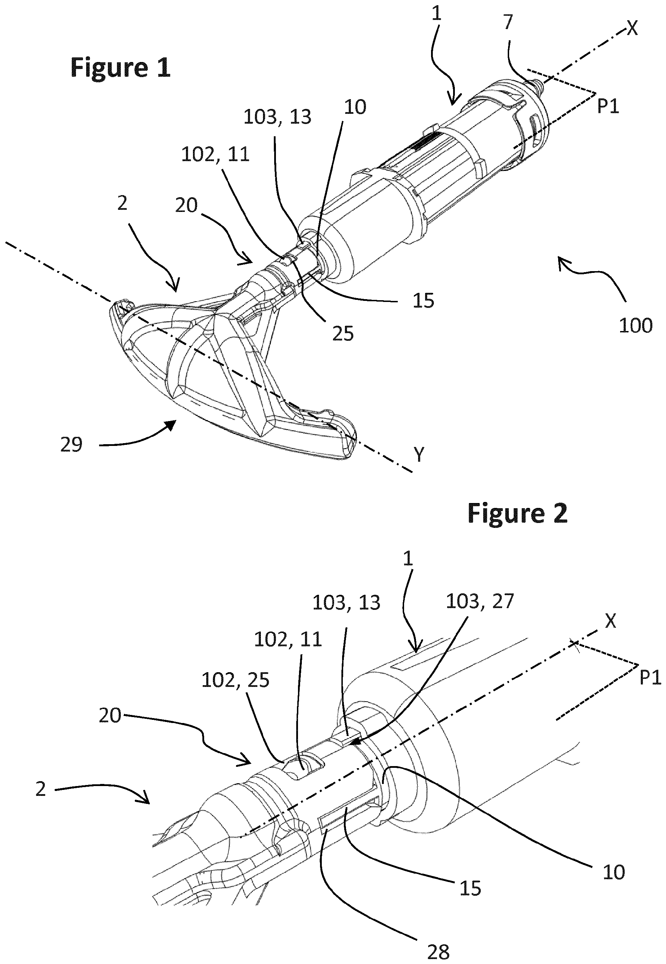

- la figure 1 est une vue schématique en perspective de la rampe de distribution et du corps d'acheminement d'un dispositif de nettoyage selon un mode particulier de réalisation de l'invention,
- la figure 2 est une vue de détails de la zone par laquelle la rampe de distribution est rattachée au corps d'acheminement et des moyens de rattachement d'un dispositif selon l'invention tel que celui illustré par la figure 1,
- la figure 3 illustre le dispositif de la figure 1, avec une vue en perspective selon un autre angle de vue que celui de la figure 1,
- la figure 4 est une vue de détails de la zone représentée sur la figure 2, selon le même angle de vue que celui présenté par la figure 3,
- la figure 5 est une vue schématique en perspective d'un piston configuré pour loger dans le corps d'acheminement du dispositif illustré par les figures 1 à 4,
- les figures 5a et 5b sont des vues de côté et de face de l'extrémité aval du piston de la figure 5,
- les figures 6a et 6b sont des vues schématiques en perspective des deux parties d'une rampe de distribution selon un mode particulier de réalisation de l'invention,
- les figures 7a et 7b sont des vues de détail des moyens de rattachement portés par les deux parties de rampe illustrés respectivement par les figures 6a et 6b,
- la figure 8 montre une vue schématique d'un système de détection pour véhicule automobile équipé du dispositif de nettoyage de la figure 1,
- et la figure 9 est une vue de face d'un véhicule automobile, dont la face avant est équipée d'un système de détection optique et d'un dispositif de nettoyage associé selon l'invention.

Il est tout d'abord à noter que si les figures exposent l'invention de manière détaillée pour sa mise en œuvre, elles peuvent bien entendu servir à mieux définir l'invention le cas échéant. De même, il est rappelé que, pour l'ensemble des figures, les mêmes éléments sont désignés par les mêmes repères.

Il est également rappelé que, dans la description qui suit, les dénominations "amont" et "aval" se réfèrent à la direction d'écoulement des fluides, qu'ils soient de nettoyage ou de séchage, dans le dispositif de nettoyage selon l'invention. Ainsi, la dénomination "amont" se réfère au côté du dispositif selon l'invention par lequel ces fluides sont admis en son sein, et la dénomination "aval" se réfère au côté du dispositif selon l'invention par lequel les fluides sont distribués à l'extérieur de celui-ci, notamment vers une surface optique d'un système de détection d'un véhicule automobile.

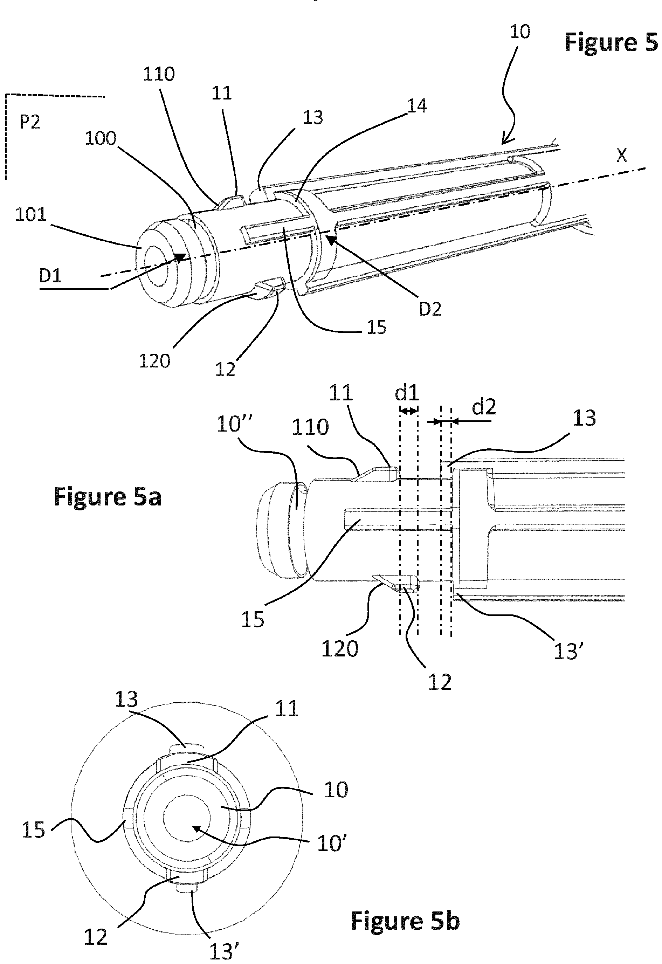

En référence aux différentes figures, le dispositif de nettoyage 100 comporte un corps d'acheminement 1 creux qui s'étend selon une direction d'extension longitudinale X : selon le mode particulier de réalisation de l'invention illustré par les figures, le corps d'acheminement 1 présente une forme sensiblement cylindrique d'axe X. Le corps d'acheminement 1 forme un cylindre dans lequel est logé un piston 10, visible seul sur la figure 5. Le piston 10 et le corps d'acheminement 1 sont avantageusement coaxiaux d'axe X : selon le mode de réalisation plus particulièrement illustré par les figures, ces deux éléments présentent une forme générale sensiblement cylindrique, d'axe de révolution X.

Le corps d'acheminement 1 présente à son extrémité amont 6 un embout d'admission 7 par lequel le fluide est injecté dans le corps d'acheminement, en provenance de réservoir(s) de stockage disposé(s) par ailleurs.

A son extrémité aval 8, à l'opposé de l'admission de fluide, le corps d'acheminement 1 est rattaché à une rampe de distribution 2 : plus précisément, selon le mode de réalisation plus particulièrement illustré par les figures, la rampe de distribution est rattachée à l'extrémité libre du piston 10, c'est-à-dire là aussi l'extrémité aval du piston.

Le piston 10 est percé d'au moins un canal d'acheminement 10' (visible sur la figure 5) qui débouche, à l'extrémité aval du piston 10, sensiblement coaxialement avec l'axe X.

La rampe de distribution 2 comporte une portion de raccordement 20, par laquelle elle se rattache à l'extrémité aval du corps d'acheminement 1 ou du piston 10, et une portion de distribution transversale 29. Selon le mode de réalisation plus particulièrement illustré par les figures, cette portion de raccordement 20 est sensiblement cylindrique, d'axe X, et ses dimensions et formes sont définies pour qu'elle constitue un élément femelle dans lequel l'extrémité libre du piston 10 vient s'insérer.

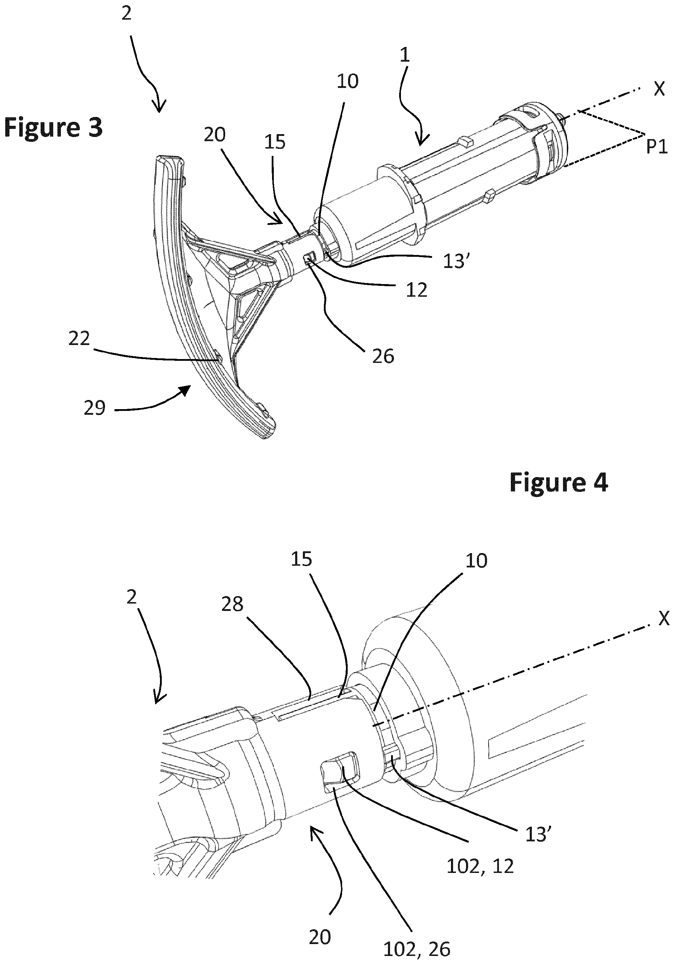

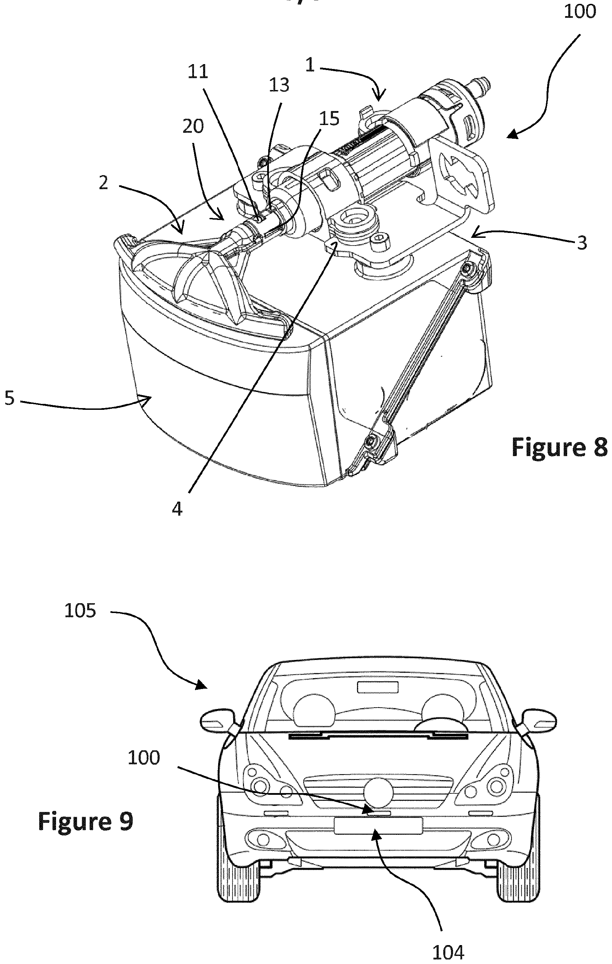

Au niveau de sa portion de distribution transversale 29, la rampe de distribution 2 comporte un canal de distribution 21 dans lequel sont agencés plusieurs orifices de distribution 22 (visibles sur la figure 3) par lesquels un ou plusieurs fluides, de nettoyage et/ou de séchage, sont projetés vers une surface optique 5 du détecteur du système de détection (visible sur la figure 8).

Afin de permettre le nettoyage d'une surface optique 5 présentant un champ de vision étendu, le canal de distribution 21 s'étend transversalement de part et d'autre de l'axe longitudinal X d'extension du corps d'acheminement. Selon le mode de réalisation plus particulièrement illustré par les figures, le canal de distribution 21 s'étend sensiblement symétriquement de part et d'autre de l'axe longitudinal X selon une direction générale transversale Y. Selon ce mode de réalisation particulier, la rampe de distribution 2 comporte un canal principal de répartition 23 qui s'étend sensiblement dans le prolongement longitudinal du piston 10, ainsi que deux canaux auxiliaires de répartition 24 symétriquement agencés de part et d'autre du canal principal de répartition 23. Avantageusement, le canal principal de répartition 23 prolonge longitudinalement le canal d'acheminement 10' avec lequel il communique de manière étanche, notamment par la présence d'un joint (non visible sur les figures) inséré dans une gorge 10" (visible sur la figure 5) agencée à l'extrémité aval du piston 10 et qui est comprimé par l'emboitement de la rampe de distribution autour de l'extrémité libre du piston 10.

Dans le dispositif de nettoyage 100 selon l'invention, la rampe de distribution 2 est fixée sur le corps d'acheminement 1 par des moyens de rattachement 101 qui comportent d'une part un ensemble d'emboitement élastique 102 et d'autre part un ensemble de détrompage 103, comportant respectivement des éléments agencés de façon complémentaire entre la rampe et le corps d'acheminement. Tel que cela sera décrit ci-après, la présence d'éléments d'emboitement élastique permet un montage rapide et fiable, et un démontage simple, de la rampe de distribution, et la présence complémentaire d'éléments de détrompage permet d'éviter un montage de la rampe de distribution dans un sens inapproprié à la distribution de fluide(s) sur la surface optique à nettoyer.

Selon le mode de réalisation de l'invention plus particulièrement illustré par les figures, le rattachement de la rampe de distribution 2 au corps d'acheminement 1 est fait par l'intermédiaire du piston 10, au niveau de l'extrémité libre de celui-ci. En d'autres termes, selon le mode de réalisation de l'invention plus particulièrement illustré par les figures, les moyens de rattachement de la rampe de distribution 2 au corps d'acheminement 1 sont portés de façon complémentaire par la rampe de distribution 2, notamment au niveau de sa portion de raccordement 20, et par le piston 10. Ce mode de réalisation est particulièrement avantageux dans le cas, le plus fréquent, où le piston 10 est télescopique, c'est-à-dire mobile entre une position de repos dans laquelle aucun fluide n'est distribué et au moins une position de travail dans laquelle il autorise la distribution de fluide de nettoyage et/ou de séchage par la rampe de distribution 2. Un tel déploiement télescopique du piston 10, le long de la direction d'extension longitudinale X du corps d'acheminement 1, permet à la rampe de distribution 2 de prendre différentes positions par rapport à la surface optique 5 à nettoyer, afin de réaliser un nettoyage optimal de cette dernière.

On va maintenant décrire plus en détails les moyens de rattachement 101 tels qu'ils viennent être présentés, c'est-à-dire formés d'un ensemble d'emboîtement élastique 102 et d'un ensemble de détrompage 103.

L'ensemble d'emboîtement élastique 102 comporte des éléments de forme complémentaires réalisés pour les uns sur le pignon 10 et pour les autres sur la rampe de distribution 2. Les éléments de l'ensemble d'emboitement élastique portés par le pignon 10 prennent ici la forme d'un premier ergot 11 et d'un deuxième ergot 12 qui s'étendent à partir de la surface périphérique extérieure du piston 10, selon une direction sensiblement radiale de celui-ci, et les éléments de l'ensemble d'emboitement élastique portés par la rampe de distribution 2 prennent ici la forme d'une première fenêtre 25 et d'une deuxième fenêtre 26 agencées dans la portion de raccordement 20.

Lors de l'assemblage du piston 10 avec la portion de raccordement 20 de la rampe de distribution 2, le premier ergot 11 est configuré pour s'insérer dans la première fenêtre 25, et le deuxième ergot 12 est configuré pour s'insérer simultanément dans la deuxième fenêtre 26.

Le premier ergot 11 et le deuxième ergot 12 présentent chacun un plan incliné, respectivement 110 et 120. Ces plans inclinés ont pour fonction de faciliter l'insertion du premier ergot 11 et du deuxième ergot 12 respectivement dans la première fenêtre 25 et dans la deuxième fenêtre 26 lors de l'assemblage de la rampe de distribution 2 avec le piston 10. A cet effet, les plans inclinés sont réalisés sur la face de l'ergot correspondant orientée vers l'aval du piston 10, c'est-à-dire à l'opposé du corps d'acheminement 1, de sorte que ce soit le plan incliné 110, 120 qui soit le premier en contact avec la portion de raccordement lors de l'assemblage du piston 10 avec la rampe de distribution 2. On permet ainsi un écartement progressif de la portion de connexion pour laisser passage aux ergots, jusqu'à ce que ceux-ci prennent place dans les fenêtres prévues à cet effet et que la portion de connexion reprenne sa forme initiale. Sur la face de l'ergot orientée à l'amont du piston, c'est-à-dire la face opposée à celle portant le plan incliné, l'ergot 11, 12 présente une face droite, sensiblement perpendiculaire à la paroi périphérique de la portion de connexion 20, qui offre une butée à l'encontre du dégagement lorsque l'ergot est logé dans la fenêtre correspondante.

En d'autres termes, la rampe de distribution 2 et le piston 10 sont ainsi verrouillés ensemble par encliquetage respectif du premier ergot 11 dans la première fenêtre 25 et du deuxième ergot 12 dans la deuxième fenêtre 26.

Selon le mode de réalisation plus particulièrement illustré par les figures, le premier ergot 11 et le deuxième ergot 12 sont sensiblement diamétralement opposés sur le piston 10. Plus précisément, ils sont sensiblement diamétralement opposés par rapport à un plan médian P1 sensiblement longitudinal transversal défini, lorsque la rampe de distribution 2 et le corps d'acheminement 1 sont assemblés, par la direction de l'axe X d'extension du piston 10 et de la portion de raccordement 20 de la rampe de distribution 2 et par la direction transversale Y d'extension du canal de distribution 21 de la rampe de distribution 2 de part et d'autre de la portion de raccordement 20.

Par ailleurs, ces éléments d'encliquetage participent en outre à la fonction de détrompage, qui permet de s'assurer que la rampe de distribution est emboîtée élastiquement dans le bon sens par rapport au corps d'acheminement, et notamment que les orifices de distribution sont correctement orientés vers la surface à nettoyer lorsque le dispositif de nettoyage est fixé au voisinage de cette surface à nettoyer.

Ainsi, le premier ergot 11 et le deuxième ergot 12 sont longitudinalement décalés sur le piston 10, tel que cela peut être visible sur la figure 5, et plus nettement sur la figure 5a. En d'autres termes, le premier ergot 11 et le deuxième ergot 12 sont décalés, selon la direction longitudinale de l'axe X, d'une distance d1. A titre d'exemple non limitatif, la distance d1 est avantageusement de l'ordre de quelques dixièmes à quelques millimètres. Bien que cela ne soit pas visible sur les figures, on comprend que la première fenêtre 25 et la deuxième fenêtre 26 sont également décalées l'une par rapport à l'autre, selon la direction longitudinale X, d'une distance sensiblement égale à la distance d'écart longitudinal d1 entre le premier ergot 11 et le deuxième ergot 12. Il résulte de cet agencement particulier que la rampe de distribution ne peut être emboîtée élastiquement correctement, uniquement dans un sens donné, avec la fenêtre et l'ergot correspondant en regard l'un de l'autre.

De manière complémentaire, et comme le montrent les figures, l'invention peut prévoir que l'un de ces ergots (ici, le premier ergot 11, selon le mode de réalisation plus particulièrement illustré par les figures) s'étende sur un secteur angulaire du piston 10 moins important que l'autre ergot (ici le deuxième ergot 12). Les dimensions même des ergots et, par conséquent, des fenêtres correspondantes agencées dans la rampe de distribution 2, constituent alors un élément de détrompage complémentaire lors de l'assemblage de la rampe de distribution 2 avec le piston 10.

Un épaulement 14 est ménagé à la périphérie du piston 10. Avantageusement, l'épaulement 14 est agencé sur la totalité de la périphérie du piston 10, et sa dimension radiale est sensiblement égale à l'épaisseur de la portion de raccordement 20 de la rampe de distribution 2. En d'autres termes, le piston 10 présente, à partir de son extrémité aval par laquelle il se rattache à la rampe de distribution 2, et en direction de son extrémité amont, selon la direction longitudinale de l'axe X, un premier diamètre D1 défini pour permettre son insertion dans la portion de raccordement sensiblement cylindrique 20 de la rampe de distribution 2, puis un deuxième diamètre D2, supérieur au premier diamètre D1, défini par la dimension radiale de l'épaulement 14. Le premier ergot 11 et le deuxième ergot 12 sont agencés sur la partie de premier diamètre D1 du piston 10, de telle manière que, lors de l'insertion de celui-ci dans la portion de raccordement sensiblement cylindrique 20 de la rampe de distribution 2, ils puissent réaliser le verrouillage par encliquetage par coopération respectivement avec la première fenêtre 25 et avec la deuxième fenêtre 26. La portion de raccordement 20 de la rampe de distribution 2 et le piston 10 forment ainsi une surface sensiblement continue dont le diamètre extérieur est sensiblement égal au deuxième diamètre D2 précédemment défini.

Des doigts de positionnement 13, 13' sont agencées en saillie du piston 10, diamétralement opposés et respectivement dans le prolongement radial de l'épaulement 14. Au moins un des doigts de positionnement 13 est configuré pour s'insérer dans une encoche 27 agencée dans le bord d'extrémité amont de la portion de raccordement 20 de la rampe de distribution. Selon le mode de réalisation plus particulièrement illustré par les figures, chaque doigt de positionnement 13,13' est longitudinalement sensiblement aligné avec un des ergots et il s'ensuit que l'encoche correspondante 27 est, sur la rampe de distribution 2, sensiblement longitudinalement alignée avec une des fenêtres. Il convient de noter que ces doigts de positionnement présentent des dimensions différentes, un premier doigt de positionnement 13 étant plus étroit que le deuxième doigt de positionnement diamétralement opposé 13', et qu'ils peuvent s'étendre longitudinalement sur des portées différentes, avec notamment un décalage longitudinal de leur face d'extrémité aval égal à une distance d2, visible sur la figure 5b.

On comprend que les doigts de positionnement 13 forment des éléments de détrompage associés au piston 10 et donc au corps d'acheminement 1 et que les encoches 27 forment des éléments de détrompage complémentaires associés à la rampe de distribution, et l'on comprend que les doigts et les encoches forment un ensemble de détrompage 103 distinct de l'ensemble d'emboîtement élastique 102 précédemment décrit. Dans l'exemple illustré, une unique encoche 27 est prévue et les doigts de positionnement présentent des dimensions différentes telles qu'un seul doigt de positionnement 13 peut pénétrer dans l'encoche, ce qui assure la fonction de détrompage. On comprendra que sans sortir du contexte de l'invention, on pourra prévoir deux encoches, diamétralement opposées et dimensionnées de manière à ne pouvoir coopérer qu'avec un doigt de positionnement spécifique.

Lors de l'assemblage de la rampe de distribution sur le corps d'acheminement, les dimensions respectives de la portion de raccordement sensiblement cylindrique 20 de la rampe de distribution 2, des encoches 27, de l'épaulement 14 et des doigts de positionnement 13 sont définies, selon l'invention, pour que, une fois les premier et deuxième ergots, respectivement 11 et 12, engagés dans les fenêtres correspondantes, respectivement 25 et 26, au moins un doigt de positionnement 13 soit engagé en butée contre le fond d'une encoche 27, et pour que l'épaisseur de la portion de raccordement sensiblement cylindrique 20 de la rampe de distribution 2 se trouve en appui contre l'épaulement 14.

Les moyens de rattachement de la rampe de distribution 2 au corps d'acheminement 1 comportent ainsi des moyens différents de détrompage, parmi lesquels l'ensemble de détrompage 103, spécifiquement dédié à cette fonction, formé par la coopération des doigts de positionnement 13, 13' et d'une ou plusieurs encoches de forme et de dimensions complémentaires 27 et l'ensemble d'emboîtement élastique 102 dans lequel un agencement particulier de chacun des ergots et des fenêtres complémentaires permet d'assurer en outre une fonction de détrompage.

Ces éléments de détrompage trouvent un intérêt particulier dans le cas d'un mode de réalisation de la rampe de distribution 2 tel qu'illustré notamment sur la figure 8. D'une manière générale, un dispositif de nettoyage selon l'invention, destiné à équiper un système de détection 104 d'un véhicule automobile 105, tel qu'illustré sur la figure 9, est fixé sur un boîtier de réception 3 d'un détecteur d'un tel système de détection, la rampe de distribution 2 et le piston 10 (ou le corps d'acheminement 1, selon le mode de réalisation choisi) étant préalablement assemblés avant l'installation du dispositif de nettoyage sur ledit boîtier de réception 3. Selon l'exemple illustré par la figure 8, le détecteur du système de détection comporte une surface optique 5 courbe. Il est donc particulièrement avantageux que la rampe de distribution 2 ou, plus précisément, le canal de distribution 21, présente une géométrie courbe permettant un nettoyage optimal de la totalité du champ de détection couvert par la surface optique 5. Il importe donc, au moment de l'assemblage de la rampe de distribution 2 avec le piston 10, de respecter une orientation spatiale relative prédéfinie entre la rampe de distribution 2 et la surface optique 5, orientation relative définie par l'orientation relative souhaitée de la rampe de distribution 2 et des orifices de distribution 22 qu'elle porte par rapport à la surface optique 5 à nettoyer. Les éléments de détrompage que constituent le premier ergot 11, le deuxième ergot 12, les première et deuxième fenêtres correspondantes, respectivement 25 et 26, ainsi que les doigts de positionnement 13, 13' et la ou les encoches complémentaires 27 permettent de réaliser de manière reproductible et sans risque d'erreur l'assemblage selon une telle orientation spatiale.

Le piston 10 peut comporter au moins un appendice latéral 15 qui s'étend, selon une direction longitudinale sensiblement parallèle à celle de l'axe longitudinal X dudit piston 10, en direction de l'aval de ce dernier à partir de l'épaulement 14 précédemment défini. Un tel appendice latéral 15 s'étend donc sur la partie du piston 10 de premier diamètre D1 précédemment définie. Selon l'invention, cet appendice latéral 15 est configuré pour s'insérer, lorsque la rampe de distribution 2 est assemblée avec le piston 10, dans une fente 28 complémentaire agencée dans la portion de raccordement sensiblement cylindrique 20 de ladite rampe de distribution 2.

Selon le mode de réalisation plus particulièrement illustré par les figures, deux appendices latéraux 15 sont agencés sur le piston 10, chacun s'étendant radialement à partir du piston 10. De manière complémentaire, deux fentes complémentaires 28 sont agencées dans la portion de raccordement sensiblement cylindrique 20 de la rampe de distribution 2. Selon ce mode de réalisation particulier, les deux appendices latéraux 15 sont diamétralement opposés sur le piston 10, et leur dimension radiale est sensiblement égale à la différence entre le deuxième diamètre D2 et le premier diamètre D1 précédemment définis. Il résulte de ce qui précède que la dimension radiale de chacun des appendices latéraux 15 est sensiblement égale à la dimension radiale de l'épaulement 14 précédemment défini. Selon le mode de réalisation de l'invention plus particulièrement illustré par les figures, les appendices radiaux 15 sont agencés, à la périphérie du piston 10, sensiblement à 90 degrés du premier ergot 11 et du deuxième ergot 12 selon une section transversale du piston 10. Plus généralement, selon un mode de réalisation particulier dans lequel le dispositif selon l'invention comporte deux appendices 15, ces derniers sont avantageusement agencés sensiblement symétriquement par rapport à un plan longitudinal médian P2 sensiblement perpendiculaire au plan médian longitudinal transversal P1 précédemment défini.

La coopération des appendices latéraux 15 avec les fentes correspondantes 28 agencées dans la rampe de distribution 2 assure une forme de guidage longitudinal de cette dernière lors de son assemblage avec le piston 10, ainsi qu'un blocage en rotation de l'assemblage ainsi réalisé.

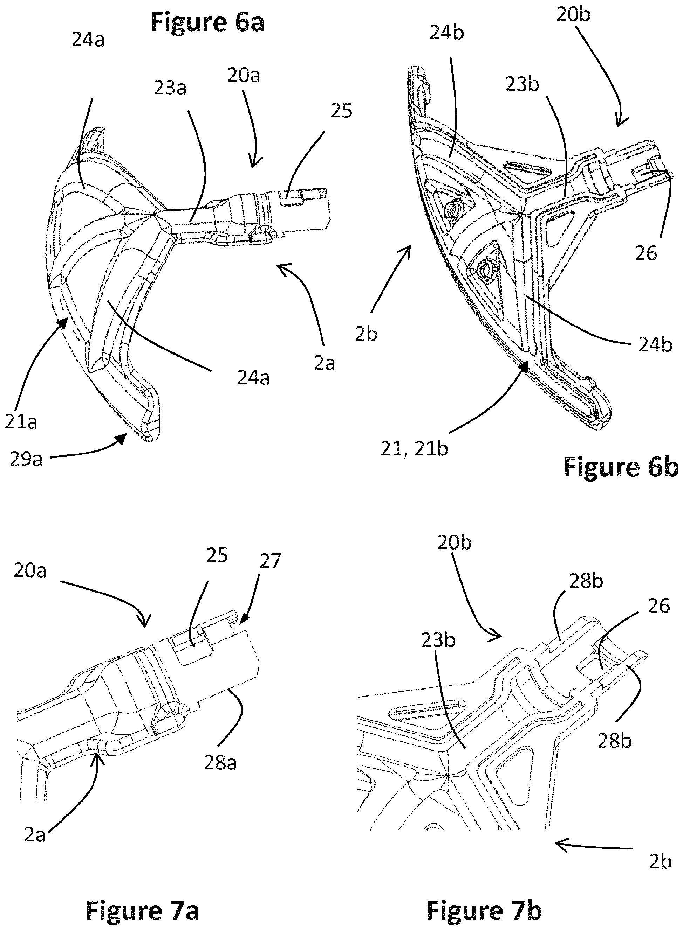

Tel qu'illustré sur les figures 6a, 6b et 7a, 7b, on peut prévoir que la rampe de distribution 2 est réalisée en deux parties, à savoir une première partie 2a et une deuxième partie 2b séparées sensiblement selon une surface médiane S (non représentée sur les figures) et assemblées par exemple par soudage. Une telle fabrication permet de réduire les coûts de fabrication, chaque partie de la rampe de distribution 2 pouvant être facilement réalisée par injection, dans un moule, d'un matériau polymère approprié, et les deux parties de la rampe de distribution 2 étant ensuite assemblées, par exemple par soudage.

Plus précisément, selon ce mode particulier de réalisation, la portion de raccordement sensiblement cylindrique 20 de la rampe de distribution 2 est formée en une première partie 20a et un deuxième partie 20b, et il en va de même du canal de distribution 21, formé en une première partie 21a et une deuxième partie 21b, du canal principal de répartition 23, formé en une première partie 23a et une deuxième partie 23b, des canaux auxiliaires de répartition 24, formés en une première partie 24a et une deuxième partie 24b, ainsi que des fentes 28, formées en une première partie 28a et en une deuxième partie 28b. La surface sensiblement médiane S contient avantageusement l'axe longitudinal X de la portion de raccordement sensiblement cylindrique 20 de la rampe de distribution 2, ainsi que les axes (non représentés sur les figures) respectivement du canal de distribution 21, du canal principal de répartition 23 et des canaux auxiliaires de répartition 24.

L'invention permet ainsi de réaliser un dispositif de nettoyage dans lequel la rampe de distribution de fluide(s) et le corps d'acheminement de ce(s) fluide(s), et notamment le piston dans le cas d'un dispositif de nettoyage télescopique, peuvent être assemblés de manière simple, reproductible, et sans erreur selon une orientation spatiale relative prédéfinie l'un par rapport à l'autre et au regard d'éléments de fixation 4 de l'assemblage qu'ils forment sur un boîtier 3 de réception d'un détecteur d'un système de détection d'un véhicule automobile.

L'invention a été décrite ici selon un mode de réalisation dans lequel la géométrie générale du corps d'acheminement et du piston est une géométrie cylindrique, il va de soi que l'invention s'applique à tout type de géométrie et de formes, dans la mesure où les éléments réalisant les différentes fonctionnalités décrites ici sont présents. De même, si l'invention est ici décrite dans un mode de réalisation dans lequel les moyens de rattachement de la rampe de distribution et du corps d'acheminement sont portés par le piston, elle s'applique également dans le cas où ces moyens de rattachement sont portés par un autre élément du corps d'acheminement, par exemple dans le cas où le dispositif de nettoyage serait fixe par rapport à la surface optique à nettoyer.

## Revendications

1. Dispositif de nettoyage (100), destiné à projeter au moins un fluide vers une surface à nettoyer d'un véhicule automobile, tel qu'une surface optique d'un capteur d'un système de détection optique, ledit dispositif de nettoyage comportant au moins un corps d'acheminement (1) et une rampe de distribution (2) d'un ou plusieurs fluides de nettoyage et/ou de séchage, ainsi que des moyens de rattachement (101) d'une portion de raccordement (20) de la rampe de distribution (2) à une extrémité du corps d'acheminement (1), **caractérisé en ce que** les moyens de rattachement (101) comportent un ensemble d'emboîtement élastique (102) et un ensemble de détrompage (103) formés respectivement par des éléments portés par le corps d'acheminement (1) et des éléments complémentaires portés par la rampe de distribution (2).

2. Dispositif de nettoyage selon la revendication 1, **caractérisé en ce que** les éléments formant l'ensemble d'emboîtement élastique (102) sont configurés en paire pour réaliser en outre une fonction de détrompage.

3. Dispositif de nettoyage selon la revendication précédente, **caractérisé en ce que** les éléments formant l'ensemble d'emboîtement élastique comportent au moins un premier ergot (11) et un deuxième ergot (12) agencés sur le corps d'acheminement (1) et une première fenêtre (25) et une deuxième fenêtre (26) agencées dans une portion de raccordement (20) de la rampe de distribution (2), ces éléments étant configurés pour que le premier ergot coopère spécifiquement avec la première fenêtre et que le deuxième ergot coopère spécifiquement avec la deuxième fenêtre.

4. Dispositif de nettoyage selon la revendication précédente, **caractérisé en ce que** le premier ergot (11) et le deuxième ergot (12) sont décalés l'un par rapport à l'autre selon une direction d'extension longitudinale (X) du corps d'acheminement (1).

5. Dispositif de nettoyage selon l'une quelconque des revendications 3 ou 4, **caractérisé en ce que** le premier ergot (11) et le deuxième ergot (12) présentent chacun, orienté vers l'aval du corps d'acheminement (1), un plan incliné (110, 120).

6. Dispositif de nettoyage selon l'une quelconque des revendications précédentes, en combinaison avec la revendication 3, dans lequel le corps d'acheminement (1) comporte un piston (10), le premier ergot (11) et le deuxième ergot (12) sont agencés sur le piston (10).

7. Dispositif de nettoyage selon l'une quelconque des revendications précédentes, **caractérisé en ce que** l'ensemble de détrompage (103) comporte au moins un doigt de positionnement (13, 13') agencé sur le corps d'acheminement (1).

8. Dispositif de nettoyage selon la revendication précédente, **caractérisé en ce que** le doigt de positionnement (13) s'étend au voisinage de l'extrémité longitudinale aval du corps d'acheminement (1).

9. Dispositif de nettoyage selon l'une quelconque des revendications 7 ou 8, **caractérisé en ce que** le doigt de positionnement (13, 13') est configuré pour se placer, lorsque la rampe de distribution (2) est assemblée avec le corps d'acheminement (1), en butée au fond d'une encoche (27) agencée dans la portion de raccordement (20) de la rampe de distribution (2).

10. Dispositif de nettoyage selon l'une quelconque des revendications 7 à 9, **caractérisé en ce que** le doigt de positionnement (13, 13') est longitudinalement sensiblement aligné avec l'un des premier ou deuxième ergots (11, 12).

11. Dispositif de nettoyage selon l'une quelconque des revendications 7 à 10, **caractérisé en ce que** l'ensemble de détrompage comporte deux doigts de positionnement (13, 13') qui présentent des dimensions, et/ou des formes, et/ou un agencement longitudinal le long du corps d'acheminement (1), différents d'un doigt de positionnement à l'autre.

12. Dispositif de nettoyage selon l'une quelconque des revendications précédentes, dans lequel la rampe de distribution (2) comporte au moins un canal de distribution (21) percé d'un ensemble d'orifices (22) de distribution d'un ou plusieurs fluides de nettoyage et/ou de séchage, **caractérisé en ce que** le canal de distribution (21) s'étend transversalement de part et d'autre de la portion de raccordement (20) de la rampe de distribution (2) par laquelle celle-ci se rattache au corps d'acheminement (1).

13. Dispositif de nettoyage selon l'une quelconque des revendications précédentes, **caractérisé en ce que** la rampe de distribution est réalisée en une première partie (2a) et une deuxième partie (2b) soudées l'une sur l'autre, chaque partie présentant de façon symétrique des éléments de l'ensemble d'emboîtement élastique (102) et des éléments de l'ensemble de détrompage (103).

14. Système de détection destiné à équiper un véhicule automobile, comprenant au moins un détecteur accueilli dans un boîtier de réception (3), **caractérisé en ce qu'**il comporte au moins un dispositif selon l'une quelconque des revendications précédentes pour le nettoyage d'une surface optique (5) dudit détecteur.

15. Véhicule automobile équipé d'un système de détection selon la revendication précédente.

## Patentansprüche

1. Reinigungsvorrichtung (100), welche dazu bestimmt ist, mindestens ein Fluid in Richtung einer zu reinigenden Fläche eines Kraftfahrzeugs, wie etwa einer optischen Fläche eines Sensors eines Systems zur optischen Detektion, zu spritzen, wobei die Reinigungsvorrichtung wenigstens einen Führungskörper (1) und ein Verteilergestänge (2) für ein oder mehrere Reinigungs- und/oder Trocknungsfluide sowie Mittel zur Verbindung (101) eines Anschlussabschnitts (20) des Verteilergestänges (2) mit einem Ende des Führungskörpers (1) umfasst, **dadurch gekennzeichnet, dass** die Verbindungsmittel (101) eine Anordnung zum elastischen Zusammenstecken (102) und eine Verwechselungsschutzanordnung (103) umfassen, die von Elementen, die von dem Führungskörper (1) getragen werden, bzw. von komplementären Elementen, die von dem Verteilergestänge (2) getragen werden, gebildet werden.

2. Reinigungsvorrichtung nach Anspruch 1, **dadurch gekennzeichnet, dass** die Elemente, welche die Anordnung zum elastischen Zusammenstecken (102) bilden, als Paar ausgebildet sind, um außerdem eine Verwechselungsschutzfunktion zu erfüllen.

3. Reinigungsvorrichtung nach dem vorhergehenden Anspruch, **dadurch gekennzeichnet, dass** die Elemente, welche die Anordnung zum elastischen Zusammenstecken bilden, wenigstens einen ersten Ansatz (11) und einen zweiten Ansatz (12), die auf dem Führungskörper (1) angeordnet sind, und ein erstes Fenster (25) und ein zweites Fenster (26), die in einem Anschlussabschnitt (20) des Verteilergestänges (2) angeordnet sind, umfassen, wobei diese Elemente dafür ausgelegt sind, dass der erste Ansatz speziell mit dem ersten Fenster zusammenwirkt und dass der zweite Ansatz speziell mit dem zweiten Fenster zusammenwirkt.

4. Reinigungsvorrichtung nach dem vorhergehenden Anspruch, **dadurch gekennzeichnet, dass** der erste Ansatz (11) und der zweite Ansatz (12) relativ zueinander in einer Längserstreckungsrichtung (X) des Führungskörpers (1) versetzt sind.

5. Reinigungsvorrichtung nach einem der Ansprüche 3 oder 4, **dadurch gekennzeichnet, dass** der erste Ansatz (11) und der zweite Ansatz (12) jeweils eine geneigte Ebene (110, 120) aufweisen, die zur stromabwärtigen Seite des Führungskörpers (1) hingerichtet ist.

6. Reinigungsvorrichtung nach einem der vorhergehenden Ansprüche in Kombination mit Anspruch 3, wobei der Führungskörper (1) einen Kolben (10) umfasst und der erste Ansatz (11) und der zweite Ansatz (12) auf dem Kolben (10) angeordnet sind.

7. Reinigungsvorrichtung nach einem der vorhergehenden Ansprüche, **dadurch gekennzeichnet, dass** die Verwechselungsschutzanordnung (103) wenigstens einen Positionierungsfinger (13, 13') umfasst, der auf dem Führungskörper (1) angeordnet ist.

8. Reinigungsvorrichtung nach dem vorhergehenden Anspruch, **dadurch gekennzeichnet, dass** sich der Positionierungsfinger (13) in der Nähe des stromabwärtigen Längsendes des Führungskörpers (1) erstreckt.

9. Reinigungsvorrichtung nach einem der Ansprüche 7 oder 8, **dadurch gekennzeichnet, dass** der Positionierungsfinger (13, 13') dafür ausgelegt ist, wenn das Verteilergestänge (2) mit dem Führungskörper (1) zusammengebaut ist, am Boden einer Aussparung (27) zur Anlage zu kommen, die im Anschlussabschnitt (20) des Verteilergestänges (2) angeordnet ist.

10. Reinigungsvorrichtung nach einem der Ansprüche 7 bis 9, **dadurch gekennzeichnet, dass** der Positionierungsfinger (13, 13') in Längsrichtung im Wesentlichen mit einem von dem ersten und dem zweiten Ansatz (11, 12) fluchtet.

11. Reinigungsvorrichtung nach einem der Ansprüche 7 bis 10, **dadurch gekennzeichnet, dass** die Verwechselungsschutzanordnung zwei Positionierungsfinger (13, 13') umfasst, welche Abmessungen und/oder Formen und/oder eine Längsanordnung entlang des Führungskörpers (1) aufweisen, die für die beiden Positionierungsfinger unterschiedlich sind.

12. Reinigungsvorrichtung nach einem der vorhergehenden Ansprüche, wobei das Verteilergestänge (2) wenigstens einen Verteilungskanal (21) umfasst, der mit einer Anordnung von Öffnungen (22) zur Verteilung eines oder mehrerer Reinigungs- und/oder Trocknungsfluide versehen ist, **dadurch gekennzeichnet, dass** sich der Verteilungskanal (21) in Querrichtung beiderseits des Anschlussabschnitts (20) des Verteilergestänges (2) erstreckt, über welchen dieses am Führungskörper (1) angebracht wird.

13. Reinigungsvorrichtung nach einem der vorhergehenden Ansprüche, **dadurch gekennzeichnet, dass** das Verteilergestänge (2) aus einem ersten Teil (2a) und einem zweiten Teil (2b) hergestellt ist, die aneinandergeschweißt sind, wobei jeder Teil auf symmetrische Weise Elemente der Anordnung zum elastischen Zusammenstecken (102) und Elemente der Verwechselungsschutzanordnung (103) aufweist.

14. Detektionssystem, welches zur Ausrüstung eines Kraftfahrzeugs bestimmt ist und wenigstens einen Detektor umfasst, der in einem Aufnahmegehäuse aufgenommen (3) ist, **dadurch gekennzeichnet, dass** es wenigstens eine Vorrichtung nach einem der vorhergehenden Ansprüche zur Reinigung einer optischen Fläche (5) des Detektors umfasst.

15. Kraftfahrzeug, welches mit einem Detektionssystem nach dem vorhergehenden Anspruch ausgerüstet ist.

## Claims

1. A cleaning device (100), intended to spray at least one fluid toward a surface to be cleaned of a motor vehicle, such as an optical surface of a sensor of an optical detection system, said cleaning device comprising at least one conveying body (1) and a delivery manifold (2) for one or more cleaning and/or drying fluids, and means (101) for attaching a coupling portion (20) of the delivery manifold (2) to an end of the conveying body (1), **characterized in that** the attachment means (101) comprise an elastic interlocking assembly (102) and a foolproofing assembly (103) formed respectively by elements borne by the conveying body (1) and complementary elements borne by the delivery manifold (2) .

2. The cleaning device as claimed in claim 1, **characterized in that** the elements forming the elastic interlocking assembly (102) are configured in pairs to also perform a foolproofing function.

3. The cleaning device as claimed in the preceding claim, **characterized in that** the elements forming the elastic interlocking assembly comprise at least a first snug (11) and a second snug (12) arranged on the conveying body (1) and a first window (25) and a second window (26) arranged in a coupling portion (20) of the delivery manifold (2), these elements being configured so that the first snug cooperates specifically with the first window and the second snug cooperates specifically with the second window.

4. The cleaning device as claimed in the preceding claim, **characterized in that** the first snug (11) and the second snug (12) are offset relative to one another in a direction of longitudinal extension (X) of the conveying body (1).

5. The cleaning device as claimed in either one of claims 3 and 4, **characterized in that** the first snug (11) and the second snug (12) each have, oriented toward the downstream end of the conveying body (1), an inclined plane (110, 120).

6. The cleaning device as claimed in any one of the preceding claims, in combination with claim 3, in which the conveying body (1) comprises a piston (10), the first snug (11) and the second snug (12) are arranged on the piston (10).

7. The cleaning device as claimed in any one of the preceding claims, **characterized in that** the foolproofing assembly (103) comprises at least one positioning finger (13, 13') arranged on the conveying body (1).

8. The cleaning device as claimed in the preceding claim, **characterized in that** the positioning finger (13) extends in the vicinity of the downstream longitudinal end of the conveying body (1).

9. The cleaning device as claimed in either one of claims 7 and 8, **characterized in that** the positioning finger (13, 13') is configured to be placed, when the delivery manifold (2) is assembled with the conveying body (1), in abutment at the bottom of a notch (27) arranged in the coupling portion (20) of the delivery manifold (2).

10. The cleaning device as claimed in any one of claims 7 to 9, **characterized in that** the positioning finger (13, 13') is longitudinally substantially aligned with one of the first or second snugs (11, 12).

11. The cleaning device as claimed in any one of claims 7 to 10, **characterized in that** the foolproofing assembly comprises two positioning fingers (13, 13') which have dimensions, and/or forms, and/or a longitudinal arrangement along the conveying body (1) that are different from one positioning finger to the other.

12. The cleaning device as claimed in any one of the preceding claims, in which the delivery manifold (2) comprises at least one dispensing channel (21) pierced by a set of orifices (22) for dispensing one or more cleaning and/or drying fluids, **characterized in that** the dispensing channel (21) extends transversely on either side of the coupling portion (20) of the delivery manifold (2) by which the latter is attached to the conveying body (1).

13. The cleaning device as claimed in any one of the preceding claims, **characterized in that** the delivery manifold is produced as a first part (2a) and a second part (2b) that are welded to one another, each part having, symmetrically, elements of the elastic interlocking assembly (102) and elements of the foolproofing assembly (103).

14. A detection system intended for a motor vehicle, comprising at least one detector accommodated in a reception housing (3), **characterized in that** it comprises at least one device as claimed in any one of the preceding claims for the cleaning of an optical surface (5) of said detector.

15. A motor vehicle equipped with a detection system as claimed in the preceding claim.
